**Europäisches Patentamt**

**European Patent Office**

**Office européen des brevets**

(19)

(11) Numéro de publication: **0 076 177**
**B1**

(12) # FASCICULE DE BREVET EUROPEEN

(45) Date de publication du fascicule du brevet:
**14.05.86**

(51) Int. Cl.⁴: **G 01 G 19/22**

(21) Numéro de dépôt: **82401407.0**

(22) Date de dépôt: **28.07.82**

(54) Procédé et dispositif de dosage de quantités prédéterminées d'au moins un produit.

(30) Priorité: **04.08.81 FR 8115094**

(43) Date de publication de la demande:
**06.04.83 Bulletin 83/14**

(45) Mention de la délivrance du brevet:
**14.05.86 Bulletin 86/20**

(84) Etats contractants désignés:
**CH DE GB IT LI NL SE**

(56) Documents cités:
**DE - A - 2 448 031**
**DE - A - 2 450 450**
**DE - A - 2 949 298**
**FR - A - 2 341 844**
**FR - A - 2 356 129**

(73) Titulaire: **ROUSSEL-UCLAF, 35, boulevard des Invalides,
F-75007 Paris (FR)**

(72) Inventeur: **Leroux, Hugues, 11-13, rue des Spernons,
F-93100-Montreuil (FR)**

(74) Mandataire: **Markovic, Borivoj et al,
ROUSSEL-UCLAF 111, route de Noisy Boîte Postale
no 9, F-93230 Romainville (FR)**

## Description

La présente invention concerne un procédé et un dispositif assurant le dosage de quantités prédéterminées d'au moins un produit.

Elle a pour objet plus particulièrement un procédé et un dispositif de dosage assurant un haut degré d'exactitude dans des conditions d'imperméabilité stricte du circuit.

On connaît déjà des procédés et des dispositifs assurant le dosage des produits lors de la préparaton de différents mélanges ou assortiments, ou lors d'assemblage de différentes pièces. La plupart d'entre eux effectuent les contrôles par pesée des quantités de produits ou de pièces destinés à être mélangés ou assemblés. Ces dispositifs et ces procédés peuvent être plus ou moins automatisés.

Les opérations de contrôle sont effectuées à l'arrêt ou en marche, souvent à une très grande vitesse.

On connaît également les procédés et les dispositifs nécessaires à leurs exécutions, qui permettent le dosage voulu des composants d'un mélange ou d'un assortiment, en comparant les valeurs des pesées des composants avec les valeurs théoriques desdits composants, et en les ajustant ensuite si nécessaire.

Ces procédés et ce type de dispositif sont fréquemment utilisés dans l'industrie, notamment en combinaison avec des récepteurs mobiles ou des bandes transporteuses, susceptibles de recevoir les composants destinés à une mélange ou à un assortiment. Les contrôles peuvent, par exemple, être effectués au moyen des dispositifs habituels, à l'arrêt ou en marche, chaque fois qu'une quantité d'un composant a été délivrée pour former un mélange ou un assortiment. On vérifie ensuite le poids total et si besoin est, effectue la rectification. La pesée du mélange peut également être effectuée seulement une fois les composants additionnés.

Ainsi, la demande de brevet DE-A 2 949 298 décrit un dispositif doté de vannes, grâce auxquelles on peut contrôler et doser l'alimentation par aspiration d'un ensemble de pesage en plusieurs matériaux pulvérulents.

Ces vannes sont disposées à la sortie des différents récipients de stockage et sont commandées par l'ensemble de pesage.

La demande de brevet DE-A 2 448 031 décrit un dispositif permettant l'obtention de mélanges de nombreux matériaux pulvérulents.

Parmi d'autres éléments, ce dispositif comporte un ensemble de pesage dont fait partie une balance qui indique en permanence son poids à vide. Lors des introductions successives des matériaux, la balance indique directement et en permanence leurs poids. Les matériaux pesés sont ensuite mélangés.

Néanmoins, dans la plupart de ces cas, l'exactitude des dosages n'atteint pas un seuil très élevé, parce qu'il s'agit de mélanges ou d'assortiments où une tolérance confortable est autorisée.

On rencontre ces types de procédés et ces dispositifs par exemple dans l'industrie alimentaire, telle que la biscuiterie, dans la mise au point des assortiments de différentes sortes, ou la préparation des mélanges pour les pâtes, dans l'industrie de transformation des matières synthétiques, dans l'industrie annexe de la construction, dans la métallurgie ou dans l'industrie chimique.

Comme on l'a constaté déjà, les quantités d'un produit à doser sont prévues avec des tolérances plus ou moins confortables en fonction des produits à doser.

Par ailleurs, la nature des produits à doser ne pose pas en général de problème particulier de contamination des lieux de travail ou de contamination croisée des différents composants traités. Les mesures habituelles de précaution et d'hygiène en vigueur dans les industries en question sont suffisantes.

Or la présente invention assure, de plus, avec succès, par le procédé appliqué et le dispositif utilisé, le dosage de quantités prédéterminées de produits avec un très haut degré d'exactitude et des conditions assurant l'imperméablité stricte du circuit, vis-à-vis des produits en cause, vis-à-vis des éléments de l'environnement et vis-à-vis de la contamination croisée.

De ce fait, ce procédé et ce dispositif peuvent être utilisés chaque fois que de telles conditions sont exigées. Le cas se présente notamment dans l'industrie pharmaceutique.

L'exactitude du dosage des mélanges médicamenteux y est d'une importance vitale, car ces mélanges peuvent contenir des produits nocifs à certaines doses.

Par ailleurs, la contamination des travailleurs ou des lieux de travail par ces produits, ainsi que la contamination croisée mutuelle des produits, destinés à entrer à un moment donné dans des mélanges médicamenteux différents peuvent présenter un danger.

Grâce à la présente invention, ces risques peuvent donc être réduits au minimum.

Comme dans l'industrie pharmaceutique, il s'agit par exemple de préparer des mélanges médicamenteux, dont certains composants sont d'un prix élevé d'une part et d'autre part dont tous les composants du mélange doivent être présents à une dose strictement réglementaire, il est impératif que la quantité de chacun d'eux soit strictement contrôlée afin qu'elle corresponde à celle voulue au départ. Ce contrôle doit être exécuté pour chaque produits avant qu'un nouveau composant ne soit additionnée afin de compléter le mélange en question. Si on procédait autrement, en ne contrôlant par exemple que le poids final d'un mélange, une fois l'addition des différents composants terminée, les quantités de chacun des composants présents dans le mélange final pourraient en effet ne pas correspondre à celles prescrites au départ.

La présente invention permet d'atteindre le but recherché. Selon le procédé de dosage de l'invention et grâce au dispositif de l'invention, la quantité de chaque composant d'un mélange à additionner est soumise à quatre pesées successives, avant que le récepteur mobile aille recevoir un nouveau composant. De cette manière, on peut déterminer avec précision et au niveau de chaque composant, que la quantité prescrite à additionner a été strictement respectée.

En ce qui concerne les problèmes de contamination mentionnés précédemment, ils ont été résolus grâce à la mise au point d'un circuit agencé de telle manière qu'il soit imperméable vis-à-vis du ou des produits en cause et vis-à-vis des éléments de l'environnement.

Dans ce qui suit, sont utilisés les termes «pesées dynamiques et pesées statiques», lesquelles pesées sont effectuées au cours du fonctionnement du dispositif objet de l'invention et de l'exécution du procédé de dosage également objet de l'invention.

Sous le terme de pesées dynamiques, il faut comprendre les pesées qui sont effectuées au cours du transfert du produit à doser, c'est-à-dire au cours du mouvement du produit à doser d'un dispositif de préstockage à l'ensemble de pesage et au cours du transfert dudit produit, de l'ensemble de pesage vers le récepteur mobile. Dans les deux cas, une fois la quantité voulue de produit transférée, le moyen effectuant les pesées commande simultanément l'arrêt des transferts.

Sous le terme des pesées statiques, il faut comprendre les pesées effectuées en l'absence de tout transfert du produit à doser, donc lors d'un arrêt des moyens assurant lesdits transferts.

Le procédé, objet de l'invention, de dosage de quantités prédéterminées d'un produit destiné à être délivré dans un récepteur mobile, comportant les étapes d'introduction du produit dans un ensemble de pesage; de pesages et vérifications des quantités du produit dans l'ensemble de pesage, d'extraction du produit de l'ensemble de pesage et d'acheminement du produit à travers un dispositif de raccordement vers le récepteur mobile, est caractérisé en ce que:

a) on introduit le produit provenant d'un ensemble de préstockage dans l'ensemble de pesage jusqu'à ce qu'une première pesée, dite dynamique, indique que la quantité voulue du produit a été introduite dans ledit ensemble de pesage, laquelle première pesée commande alors l'arrêt d'introduction du produit;
b) on vérifie par une deuxième pesée, dite statique, quelle quantité effective du produit se trouve dans l'ensemble de pesage;
c) on fait sortir le produit de l'ensemble de pesage après avoir ouvert une première vanne papillon à l'entrée du dispositif de raccordement jusqu'à ce qu'une troisième pesée, dite dynamique, indique que la quantité voulue a quitté ledit ensemble de pesage, laquelle troisième pesée commande alors l'arrêt de la sortie du produit de l'ensemble de pesage
d) on effectue une quatrième pesée, dite statique de la quantité du produit encore contenue dans l'ensemble de pesage après avoir nettoyé le dispositif de raccordement et fermé une deuxième vanne papillon à la sortie du dispositif de raccordement;
e) on contrôle que la quantité voulue du produit a été extraite de l'ensemble de pesage pour être acheminée vers le récepteur mobile, par comparaison entre les valeurs des deux pesées statiques, à savoir la deuxième pesée et la quatrième pesée
f) si nécessaire, on complète au poids voulu en faisant délivrer par l'ensemble de pesage, pour la faire parvenir dans le récepteur mobile, la quantité du produit nécessaire pour égaler la dose de produit voulue au départ,

ledit procédé s'effectuant dans des conditions assurant l'imperméabilité de l'ensemble de pesage vis-à-vis du produit et vis-à-vis des éléments de l'environnement.

Ce procédé, dans des modes particuliers de réalisation de l'invention, est encore caractérisé par les points suivants:

– il assure l'exactitude de dosage avec une précision de ± 2,5‰ du poids pesé;
– au début du procédé, on effectue en outre les étapes suivantes:

– on vidange le produit à doser dans l'ensemble de préstockage, notamment sous dépression, en exerçant une pression sur la paroi d'un contenant pouvant être déformable dans lequel le produit est renfermé, au moyen d'un dispositif pneumatique, ou en soumettant le contenu à des vibrations ou à des secousses, et
– on homogénéise le produit, si nécessaire, dans l'ensemble de préstockage.

Le procédé peut présenter les aspects suivants:

– le transfert du produit et les opérations de pesage au cours de l'exécution du procédé sont assurés dans des conditions d'imperméabilité du circuit vis-à-vis du produit en cause et vis-à-vis des éléments de l'environnement, pour éviter la contamination du lieu de travail et, lorsque fonctionnent au moins deux ensembles de pesage 11, comportant deux produits différents, la contamination croisée des produits contenus dans les ensembles de pesage;
– les conditions d'imperméabilité dans lesquelles le procédé est exécuté assurent que le niveau de contamination du milieu dans lequel un ensemble de pesage 11 est installé, ne peut pas dépasser 350 particules d'un ou des produits traités par litre d'air ambiant, ou bien environ 10 000 particules par pied cube d'air ambiant, afin de créer les conditions de travail dites de salle blanche;
– la vidange d'un contenant 1 pouvant être déformable, s'effectue rapidement, en environ 5 à 7 minutes pour un contenant renformant 200 kg de produit environ;
– le moyen 9 utilisé pour homogénéiser et transférer le produit à doser doit simultanément éliminer le risque d'adhérence du produit à doser à la paroi de la trémie tampon 8′. Ce moyen peut aussi être sous forme d'un malaxeur, d'une hélice ou d'un vibrateur;

– la trémie tampon 8′ étant lavée au moyen d'un jet d'eau chaude ou froide, il va de soi que lors d'un lavage, la trémie tampon 8′ doit être déconnectée du conduit de vidange 4 et de l'ensemble de pesage 11;

– pour faciliter la vidange d'un contenant 1 et le transfert du produit à doser dans la trémie tampon 8′, on installe dans le conduit de vidange 4 une dépression, grâce à laquelle se produit l'aspiration des particules du produit vers la trémie tampon 8′;

– pour nettoyer le conduit de vidange 4 des particules y restant, une fois le transfert du produit à doser terminé, on fait souffler de l'air ou un gaz inerte à travers ledit conduit 4;

– le commencement du transfert du produit à doser de la trémie tampon 8′ dans l'ensemble de pesage 11, une fois la vanne 10 ouverte, est commandé automatiquement et l'arrêt du transfert et l'interruption de la communication entre la trémie tampon 8′ et l'ensemble de pesage 11, par la fermeture de la vanne 10, est commandée par le moyen exécutant les pesées 14;

– le commencement du transvasement du produit à doser dans un récepteur mobile 16 est commandé automatiquement;

– l'arrêt du transvasement du produit à doser dans le récepteur mobile 16 est commandé par le moyen effectuant les pesées 14 quand ce dernier a établi par le pesage que la quantité déterminée de produit a quitté l'ensemble de pesage 11;

– les pesées statiques de quantités de produits à doser contenues dans l'ensemble doseur sont commandées automatiquement;

– pour faciliter le transfert du produit à doser dans un récepteur mobile 16, on installe une dépression dans le dispositif de raccordement 15 reliant l'ensemble de pesage 11 audit récepteur mobile 16, une fois la vanne papillon 17′ de la sortie du dispositif de raccordement 15 ouverte et la vanne papillon 17 de son entrée fermée; grâce à la dépression, peut se produire l'effet d'aspiration des particules du produit à doser présentes dans ledit dispositif de raccordement 15;

– pour nettoyer le dispositif de raccordement 15, une fois la quantité voulue du produit à doser transférée dans un récepteur mobile 16 et une fois le dispositif installant la dépression déconnecté, on fait souffler de l'air ou un gaz inerte dans ledit dispositif de raccordement 15, afin de chasser les particules du produit pouvant encore y être restées;

– une fois le dosage et le nettoyage terminés on commande automatiquement:

– la fermeture de la vanne papillon 17′ de la sortie du dispositif de raccordement 15 et l'ouverture 21 de celle fermant le récepteur mobile 16;

– le décrochage du récepteur mobile 16 du dispositif de raccordement 15;

– et le déplacement dudit récepteur mobile 16 vers un autre poste de distribution ou, dans le cas où tous les composants d'un mélange ont déjà été additionnés, vers les installations assurant le prochain stade de fabrication.

Le dispositif, également objet de l'invention, de dosage de quantités prédéterminées d'un produit destiné à être délivré dans un récepteur mobile, pour la mise en œuvre du procédé selon l'invention, comportant un ensemble de pesage est constitué par:

a) une trémie doseuse dotée d'un moyen destiné à délivrer le produit à doser au récepteur mobile tel qu'un extracteur-doseur;
b) un moyen de pesage, et
c) un moyen d'acheminement pour assurer l'acheminement du produit dans le récepteur mobile et pour obturer la sortie de l'ensemble de pesage, ce moyen étant constitué par un dispositif de raccordement placé entre le moyen de pesage et le récepteur mobile,

et est caractérisé en ce que:

– le moyen de pesage est apte à effectuer des pesées statiques et des pesées dynamiques; et en ce que l'ensemble de pesage comporte en outre
– des moyens permettant de créer et de maintenir l'imperméabilité de l'ensemble de pesage vis-à-vis du produit et vis-à-vis des éléments de l'environnement;
– des moyens susceptibles d'installer la dépression dans les moyens permettant de créer et de maintenir l'imperméabilité de l'ensemble de pesage;
– des moyens pour permettre le nettoyage du moyen d'acheminement, des particules du produit pouvant encore subsister dans le moyen d'acheminement, une fois l'acheminement achevé, et
– des moyens pour conduire automatiquement ledit procédé.

Ce dispositif, dans un mode particulier de réalisation de l'invention, peut encore être caractérisé en ce que il comporte en outre:

– un moyen assurant la vidange du contenant renfermant le produit, et
– un ensemble de préstockage assurant simultanément l'homogénéisation, si nécessaire, et le transfert du produit vers l'ensemble de pesage.

Ce dispositif, dans d'autres modes de réalisation de l'invention, peut encore être caractérisé par les points suivants:

– le moyen assurant la vidange du contenant comporte:

a) un vibrateur ou un appareil pneumatique susceptible d'exercer une pression et coopérant avec la paroi éventuellement déformable du contenant;
b) un conduit de vidange relié d'une manière étanche et sumultanée, d'une part avec l'ouverture dudit contenant et d'autre part avec l'entrée d'une trémie tampon de préstockage, ladite trémie tampon faisant partie de l'ensemble de préstockage, ce conduit de vidange étant doté en outre d'une vanne d'isolement;

– le conduit de vidange est doté d'un moyen susceptible de créer une dépression et de provoquer ainsi un effet d'aspiration dans ledit conduit et d'un moyen de soufflerie destiné à nettoyer ledit conduit des particules du produit à doser, ce moyen de soufflerie agissant une fois la vidange terminée;
– la trémie tampon est dotée d'un moyen pour homogénéiser le produit, l'extraire et pour éliminer le risque d'adhérence du produit à la parois de ladite trémie tampon (8'), tel qu'un extracteur sous forme d'une vis sans fin, la mise en marche dudit moyen pour extraire le produit et son arrêt étant commandés automatiquement par le moyen de pesage, quand l'ensemble de pesage a reçu la charge voulue du produit à doser;
– le moyen d'acheminement est doté de deux vannes papillon;
– les moyens permettant de créer et de maintenir l'imperméabilité de l'ensemble de pesage, sont constitués par des raccordements, conduits, joints, valves, vannes, vannes papillon, sangles clapets ou couvercles;
– les moyens pour conduire automatiquement ledit procédé assurant la totalité ou une partie des opérations effectuées sur ledit dispositif sont constitués par un ordinateur exécutant les ordres selon un programme préétabli;
– le moyen destiné à délivrer le produit à doser au récepteur mobile se présente sous forme d'une vis sans fin située à la partie inférieure de la trémie doseuse dont la mise en marche est commandée automatiquement et dont l'arrêt est commandé par le moyen de pesage quand une quantité voulue de produit a quitté la trémie doseuse;
– le moyen de pesage est un dispositif de balance fonctionnant simultanément à taux d'allègement et à taux d'augmentation de charge, et pouvant en outre effectuer des pesées statiques.

Le dispositif peut présenter les aspects suivants:

– le moyen pour assurer le transvasement du produit vers le récepteur mobile 16 et pour obturer la sortie de l'ensemble de pesage 11 est constitué par un dispositif de raccordement étanche 15, faisant liaison entre ledit ensemble de pesage 11 et ledit récepteur mobile 16, doté de deux vannes papillon 17 et 17', est relié en outre à un dispositif d'aspiration 18 et à un dispositif de soufflage 19, ce dispositif de raccordement pouvant être connecté d'une manière automatique à l'ouverture du récipient mobile 16;

– le moyen 3 assurant la vidange du contenant est doté d'une assise 2 destinée à recevoir et maintenir en place ledit contenant 1;
– le conduit de vidange 4 est relié au contenant 1 et leur liaison et rendue étanche par une sangle;
– l'opération de liaison entre le conduit de vidange 4 et le contenant est effectuée manuellement ou automatiquement;
– le dispositif 6 destiné à créer la dépression dans le conduit de vidange et dans le contenant, et par conséquent de provoquer l'effet d'aspiration des particules du produit à doser, est par exemple une pompe à vide et il est relié au conduit de vidange 4 par l'intermédiaire d'une valve ou d'une vanne;
– le dispositif de soufflerie 7 destiné à nettoyer par soufflage le conduit de vidange 4, est par exemple un compresseur et il est relié audit conduit de vidange 4 par une valve ou une vanne;
– le gaz utilisé par le dispositif de soufflage 7 est l'air ou un gaz inerte, choisi en fonction du caractère chimique et physique du produit à doser;
– la trémie tampon 8' est dotée d'un dispositif assurant le lavage de celle-ci au moyen d'un dispositif tel que, par exemple, un dispositif produisant un jet d'eau froide ou chaude;
– la sortie de la trémie tampon 8' est agencée de manière à ce qu'elle puisse être accouplée automatiquement à l'entrée de la trémie doseuse 12;
– la sortie de la trémie tampon 8' est dotée d'une vanne 10 commandant l'ouverture et la fermeture de ladite sortie;
– la mise en marche du moyen 9 pour extraire le produit de la trémie tampon 8' est commandée automatiquement et son arrêt est commandé par le moyen effectuant les pesées 14 quand l'ensemble doseur 11 a reçu la charge voulue du produit à doser;
– le transvasement d'une quantité déterminée du produit à doser de l'ensemble de pesage 11 au récepteur mobile 16 est commandé automatiquement et l'arrêt de transvasement est commandé par le moyen effectuant les pesées 14 quand la quantité déterminée du produit a quitté ledit ensemble de pesage 11;
– l'entrée de l'ensemble de pesage 11 est agencée de manière à ce qu'elle puisse être accouplée automatiquement à la sortie de la trémie tampon 8';
– l'ensemble de pesage 11 est agencé de manière à garantir d'une part une stabilité thermique excluant les écarts de température supérieurs à 2°C par rapport à la température voulue, et d'autre part à garantir une humidité relative de 50% ±5% et l'élimination des vibrations parasites;
– le dispositif de raccordement 15 est agencé de manière qu'une de ses extrémités puisse être accouplée hermétiquement à la sortie de l'ensemble de pesage 11 et que l'autre de ces extrémités puisse être accouplée automatiquement à l'ouverture du récepteur mobile 16;
– le dispositif de raccordement 15 faisant liaison entre l'ensemble de pesage 11 et le récepteur mobile 16, est doté de deux vannes papillon, dont l'une 17 est placée à l'entrée et l'autre 17' est placée à la sortie dudit dispositif de raccordement 15;
– l'entrée du récepteur mobile 16 est dotée d'une vanne papillon 21 dont l'ouverture et la fermeture sont commandées automatiquement.

Il va de soi que tous les éléments du dispositif, objet de l'invention, entrant en contact avec les produits à doser doivent être exécutés en des matériaux chimiquement inertes vis-à-vis desdits produits. De tels matériaux peuvent être choisis parmi les aciers inoxydables, les matières plastiques telles que le téflon et les matières plastiques utilisées pour les produits alimentaires.

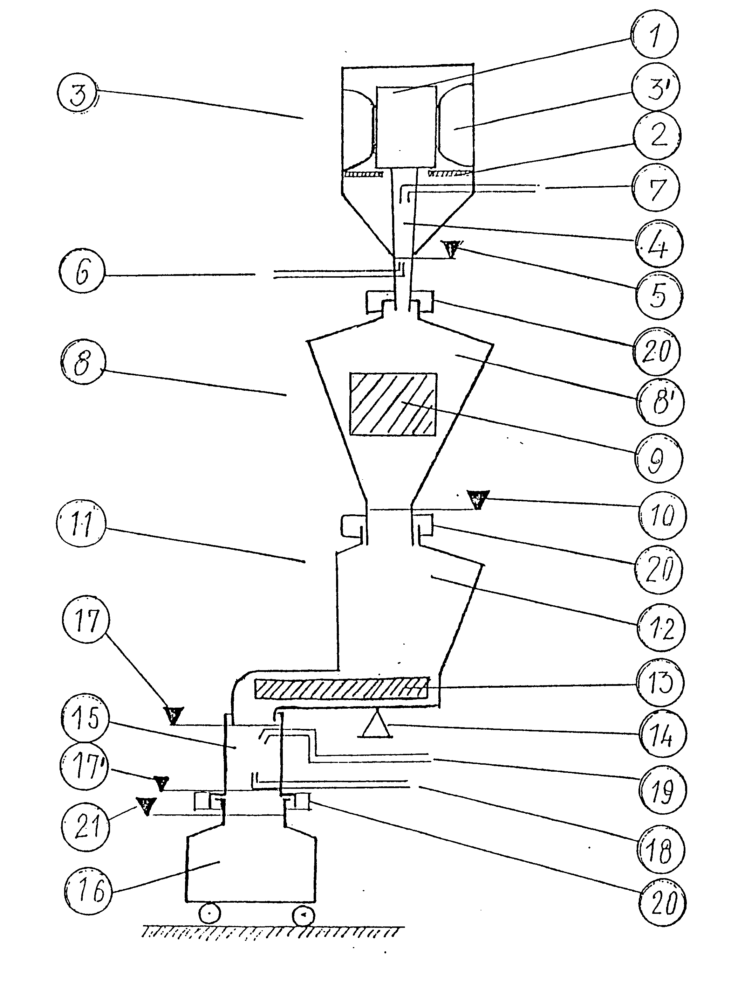

Le dessin schématique annexé montre à titre d'illustration un poste de distribution selon l'invention. Sur ce dessin:

1. Représente le contenant renfermant le produit à doser;
2. l'assise sur laquelle on dépose le contenant 1 à vidanger;
3. le moyen assurant la vidange du contenant 1, ce moyen comportant un dispositif pneumatique 3' pouvant exercer une pression sur la parois déformable du contenant 1, un conduit de vidange 4 et 5 la vanne d'isolement;
6. le dispositif susceptible d'installer la dépression dans le conduit de vidange 4;
7. le dispositif de soufflerie destiné à nettoyer le conduit de vidange 4;
8. le dispositif de préstockage du produit à doser sous forme d'une trémie tampon 8' dotée d'un moyen 9 assurant l'homogénéisation du produit, son extraction et l'élimination du risque d'adhérence dudit produit à la parois de la trémie tampon 8', tel qu'un extracteur, un malaxeur ou un vibrateur;
10. la vanne obturant la sortie de la trémie tampon 8';
11. l'ensemble de pesage constitué par une trémie doseuse 12, dotée dans sa partie inférieure d'un moyen tel qu'un extracteur doseur 13, et d'un moyen 14 pour effectuer les pesées successives;
15. le dispositif de raccordement assurant le transvasement du produit pesé vers le récepteur mobile 16;
17. et 17'. les vannes papillon respectivement de l'entrée et de la sortie du dispositif de raccordement 15;
18. le dispositif susceptible d'installer la dépression dans le dispositif de raccordement 15;
19. le dispositif de soufflerie destiné à nettoyer le dispositif de raccordement 15;
20. les moyens assurant l'imperméabilité du circuit;
21. la vanne fermant l'entrée du récepteur mobile 16.

Comme déjà dit, le dispositif et le procédé de la présente invention satisfont plus particulièrement aux exigences très strictes d'une industrie telle que l'industrie pharmaceutique. A titre d'exemple, on peut citer l'utilisation du dispositif et du procédé de l'invention dans le dosage d'un mélange à partir de produit de nature poudreuse.

Ce dispositif et ce procédé peuvent plus particulièrement être très utiles lors de la fabrication à l'échelle industrielle.

Ainsi par exemple, ils peuvent être adaptés de manière à ce que:

– la capacité de la trémie tampon 8' assurant le préstockage du produit à doser vidangé du contenant 1, soit de l'ordre de 2000 à 2500 litres,
– et que l'ensemble de pesage 11 soit capable de délivrer au récepteur mobile 16 des charges du produit à doser allant de 1 kg à 250 kg.

Ce dispositif et ce procédé peuvent également être utilisés pour l'obtention de mélanges de liquides ou de gaz, ou de mélanges de poudres et de liquides, de liquides et de gaz, de gaz liquéfiés, de gaz et de poudres ou de poudres, liquides et gaz.

Le procédé de dosage reste le même, seul les moyens assurant l'imperméabilité du circuit vis-à-vis des produits dosés et vis-à-vis des éléments d'environnement sont choisis en fonction de la nature de produits à doser et à mélanger.

De ce fait, le dispositif et le procédé de l'invention peuvent également être utilisés notamment dans l'industrie cosmétique, de parfumerie, para-pharmaceutique, alimentaire, chimique ou autres.

Grâce au dispositif et selon le procédé de l'invention, on peut assurer le dosage selon les normes d'exactitude voulues et sous les conditions d'imperméabilité du circuit exigées.

**Revendications**

1. Procédé de dosage de quantités prédéterminées d'un produit destiné à être délivré dans un récepteur mobile (16), comportant les étapes d'introduction du produit dans un ensemble de pesage (11); de pesages et vérifications des quantités du produit dans l'ensemble de pesage, d'extraction du produit de l'ensemble de pesage et d'acheminement du produit à travers un dispositif de raccordement (15) vers le récepteur mobile, ledit procédé étant caractérisé en ce que:

a) on introduit le produit provenant d'un ensemble de préstockage (8) dans l'ensemble de pesage (11) jusqu'à ce qu'une première pesée, dite dynamique (I), indique que la quantité voulue du produit a été introduite dans ledit ensemble de pesage (11), laquelle première pesée commande alors l'arrêt d'introduction du produit;
b) on vérifie par une deuxième pesée, dite statique (II), quelle quantité effective du produit se trouve dans l'ensemble de pesage (11);
c) on fait sortir le produit de l'ensemble de pesage (11) après avoir ouvert une première vanne papillon (17) à l'entrée du dispositif de raccordement (15) jusqu'à ce qu'une troisième pesée, dite dynamique (III), indique que la quantité voulue a quitté ledit ensemble de pesage (11), laquelle troisième pesée (III) commande alors l'arrêt de la sortie du produit de l'ensemble de pesage (11);

d) on effectue une quatrième pesée, dite statique (IV) de la quantité du produit encore contenue dans l'ensemble de pesage (11) après avoir nettoyé le dispositif de raccordement (15) et fermé une deuxième vanne papillon (17') à la sortie du dispositif de raccordement (15);

e) on contrôle que la quantité voulue du produit a été extraite de l'ensemble de pesage (11) pour être acheminée vers le récepteur mobile (16), par comparaison entre les valeurs des deux pesées statiques, à savoir la deuxième pesée (II) et la quatrième pesée (IV);

f) si nécessaire, on complète au poids voulu en faisant délivrer par l'ensemble de pesage (11), pour la faire parvenir dans le récepteur mobile (16), la quantité du produit nécessaire pour égaler la dose de produit voulue au départ,

ledit procédé s'effectuant dans des conditions assurant l'imperméabilité de l'ensemble de pesage vis-à-vis du produit et vis-à-vis des éléments de l'environnement.

2. Procédé suivant la revendication 1, caractérisé en ce que:

– il assure l'exactitude de dosage avec une précision de ± 2,5‰ du poids pesé.

3. Procédé de dosage suivant la revendication 1, caractérisé en ce que, au début du procédé, on effectue en outre les étapes suivantes:

– on vidange le produit à doser dans l'ensemble de préstockage (8), notamment sous dépression, en exerçant une pression sur la paroi d'un contenant (1) pouvant être déformable dans lequel le produit est renfermé, au moyen d'un dispositif pneumatique, ou en soumettant le contenant (1) à des vibrations ou à des secousses, et

– on homogénéise le produit, si nécessaire, dans l'ensemble de préstockage (8).

4. Dispositif de dosage de quantité prédéterminées d'un produit destiné à être délivré dans un récepteur mobile (16), pour la mise en œuvre du procédé selon la revendication 1, comportant un ensemble de pesage (11) constitué par:

a) une trémie doseuse (12) dotée d'un moyen (13) destiné à délivrer le produit à doser au récepteur mobile (16) tel qu'un extracteur-doseur;

b) un moyen (14) de pesage, et

c) un moyen (15) d'acheminement pour assurer l'acheminement du produit dans le récepteur mobile (16) et pour obturer la sortie de l'ensemble de pesage (11), ce moyen étant constitué par un dispositif de raccordement (15) placé entre le moyen de pesage (14) et le récepteur mobile,

ledit dispositif étant caractérisé en ce que:

– le moyen de pesage (14) est apte à effectuer des pesées statiques et des pesées dynamiques; et en ce que l'ensemble de pesage (11) comporte en outre

– des moyens (20) permettant de créer et de maintenir l'imperméabilité de l'ensemble de pesage vis-à-vis du produit et vis-à-vis des éléments de l'environnement;

– des moyens (18) susceptibles d'installer la dépression dans les moyens (20) permettant de créer et de maintenir l'imperméabilité de l'ensemble de pesage;

– des moyens (19) pour permettre le nettoyage du moyen (15) d'acheminement, des particules du produit pouvant encore subsister dans le moyen d'acheminement, une fois l'acheminement achevé, et

– des moyens pour conduire automatiquement ledit procédé.

5. Dispositif selon la revendication 4 et pour la mise en œuvre du procédé selon la revendication 3, caractérisé en ce que ledit dispositif comporte en outre:

– un moyen (3) assurant la vidange du contenant (1) renfermant le produit, et

– un ensemble de préstockage (8) assurant simultanément l'homogénéisation, si nécessaire, et le transfert du produit vers l'ensemble de pesage (11).

6. Dispositif selon la revendication 5, caractérisé en ce que:

– le moyen (3) assurant la vidange du contenant (1) comporte:

a) un vibrateur ou un appareil pneumatique (3') susceptible d'exercer une pression et coopérant avec la paroi éventuellement déformable du contenant (1);

b) un conduit de vidange (4) relié d'une manière étanche et simultanée, d'une part avec l'ouverture dudit contenant (1) et d'autre part avec l'entrée d'une trémie tampon (8') de préstockage, ladite trémie tampon faisant partie de l'ensemble de préstockage, ce conduit de vidange (4) étant doté en outre d'une vanne d'isolement (5).

7. Dispositif selon la revendication 4, caractérisé en ce que ledit dispositif comporte en outre un conduit de vidange (4) qui est doté d'un moyen (6) susceptible de créer une dépression et de provoquer ainsi un effet d'aspiration dans ledit conduit (4) et d'un moyen de soufflerie (7) destiné à nettoyer ledit conduit (4) des particules du produit à doser, ce moyen de soufflerie (7) agissant une fois la vidange terminée.

8. Dispositif selon la revendication 5, caractérisé en ce que la trémie tampon (8') est dotée d'un moyen (9) pour homogénéiser le produit, l'extraire et pour éliminer le risque d'adhérence du produit à la paroi de ladite trémie tampon (8'), tel qu'un extracteur sous forme d'une vis sans fin, la mise en marche dudit moyen pour extraire le produit et son arrêt étant commandés automatiquement par le moyen (14) de pesage, quand l'ensemble de pesage (11) a reçu la charge voulue du produit à doser.

9. Dispositif selon la revendication 4, caractérisé en ce que le moyen (15) d'acheminement est doté de deux vannes papillon (17) et (17').

10. Dispositif selon la revendication 4, caractérisé en ce que les moyens (20) permettant de créer et de maintenir l'imperméabilité de l'ensemble de pesage, sont constitués par des raccordements, conduits, joints, valves, vannes, vannes papillon, sangles, clapets ou couvercles.

11. Dispositif selon la revendication 4, caractérisé en ce que les moyens pour conduire automatiquement ledit procédé assurant la totalité ou une partie des opérations effectuées sur ledit dispositif sont constitués par un ordinateur exécutant les ordres selon un programme préétabli.

12. Dispositif selon la revendication 4, caractérisé en ce que le moyen (13) destiné à délivrer le produit à doser au récepteur mobile (16) se présente sous forme d'une vis sans fin située à la partie inférieure de la trémie doseuse (12) dont la mise en marche est commandée automatiquement et dont l'arrêt est commandé par le moyen (14) de pesage quand une quantité voulue de produit a quitté la trémie doseuse (12).

13. Dispositif selon la revendication 4, caractérisé en ce que le moyen (14) de pesage est un dispositif de balance fonctionnant simultanément à taux d'allègement et à taux d'augmentation de charge et pouvant en outre effectuer des pesées statiques.

**Patentansprüche**

1. Verfahren zum Dosieren von gegebenen Mengen eines Produkts, das in einen beweglichen Aufnehmer (16) geliefert werden soll, mit den Schritten des Einführens des Produkts in eine Wiegeeinrichtung (11), des Wiegens und Prüfens der Mengen des Produkts in der Wiegeanordnung, des Entnehmens des Produkts aus der Wiegeanordnung und des Förderns des Produkts durch eine Verbindungsvorrichtung (15) zum beweglichen Aufnehmer, wobei sich das Verfahren dadurch auszeichnet, dass

a) man das von einer Vorspeicheranordnung (8) stammende Produkt in die Wiegeanordnung (11) einführt, bis eine erste sogenannte dynamische Wägung (1) anzeigt, dass die gewünschte Menge des Produkts in die Wiegeeinrichtung (11) eingeführt wurde, wobei die erste Wägung dann das Anhalten der Einführung des Produkts befiehlt,
b) man durch eine zweite sogenannte statische Wägung (II) prüft, welche tatsächliche Menge des Produkts sich in der Wiegeanordnung (11) befindet,
c) man das Produkt an der Wiegeanordnung (11) austreten lässt, nachdem ein erster Drehschieber (17) am Eintritt der Verbindungsvorrichtung (15) geöffnet wurde, bis eine dritte sogenannte dynamische Wägung (III) anzeigt, dass die gewünschte Menge die Wiegeeinrichtung (11) verlassen hat, wobei die dritte Wägung (III) dann den Austritt des Produkts aus der Wiegeanordnung (11) unterbricht,
d) man eine vierte sogenannte statische Wägung (IV) der Menge des Produkts ausführt, die noch in der Wiegeanordnung (11) enthalten ist, nachdem die Verbindung (15) gereinigt und ein zweiter Drehschieber (17') am Austritt der Verbindungsvorrichtung (15) geschlossen wurde,
e) man kontrolliert, dass die gewünschte Menge des Produkts aus der Wiegeanordnung (11) entnommen wurde, um zum beweglichen Aufnehmer (16) gefördert zu werden, und zwar durch Vergleich zwischen den Werten der statischen Wägungen, nämlich der zweiten Wägung (II) und der vierten Wägung (IV),
f) man, falls erforderlich, am gewünschten Gewicht die Menge des Produkts ergänzt, die erforderlich ist, um die zu Beginn gewünschte Produktdosis zu erreichen, was dadurch erfolgt, dass man sie durch die Wiegeanordnung (11) liefern lässt, um sie in den beweglichen Aufnehmer (16) gelangen zu lassen,

wobei das Verfahren unter Bedingungen ausgeführt wird, die die Durchlässigkeit der Wiegeeinrichtung gegenüber dem Produkt und gegenüber den Elementen der Umgebung gewährleisten.

2. Verfahren nach Anspruch 1, dadurch gekennzeichnet, dass es die Dosiergenauigkeit mit einer Genauigkeit von ±2,5‰ des gewogenen Produkts gewährleistet.

3. Dosierverfahren nach Anspruch 1, dadurch gekennzeichnet, dass man zu Beginn des Verfahrens ausserdem die folgenden Schritte ausführt:

– man entleert das zu dosierende Produkt in die Vorspeicheranordnung (8), insbesondere unter Unterdruck, dadurch, dass ein Druck auf die Wand eines Behälters (1) ausgeübt wird, der verformbar sein kann und in dem das Produkt durch eine pneumatische Einrichtung eingeschlossen ist, oder dass der Behälter (1) Schwingungen oder Stössen ausgesetzt wird, und
– man homogenisiert das Produkt, falls erforderlich, in der Vorspeicheranordnung (8).

4. Vorrichtung zum Dosieren von gegebenen Mengen eines Produkts, das in einen beweglichen Aufnehmer (16) geliefert werden soll, zur Durchführung des Verfahrens nach Anspruch 1, mit einer Wiegeanordnung (11), die gebildet ist durch:

a) einen Dosiertrichter (12) mit einer Einrichtung (13) zum Liefern eines zu dosierenden Produkts zu einem beweglichen Aufnehmer (16), wie einem Extraktor-Dosiergerät,
b) eine Wiegeeinrichtung (14) und
c) eine Fördereinrichtung (15) zum Gewährleisten der Förderung des Produkts in den beweglichen Aufnehmer (16) und zum Verschliessen des Austritts der Wiegeanordnung (11), wobei diese Einrichtung aus einer zwischen der Wiegeeinrichtung (14) und dem beweglichen Aufnehmer angeordnete Verbindungseinrichtung (15) besteht,

wobei die Vorrichtung sich dadurch auszeichnet,

- dass die Wiegeeinrichtung (14) statische und dynamische Wägungen ausführen kann, und
- dass die Wiegeanordnung (11) ausserdem aufweist:

- Einrichtungen (20), die es ermöglichen, die Undurchlässigkeit der Wiegeeinrichtung gegenüber dem Produkt und gegenüber Elementen der Umgebung herzustellen und aufrechtzuerhalten,
- Einrichtungen (18), die den Unterdruck in der Einrichtung (20) erzeugen können, die die Undurchlässigkeit der Wiegeeinrichtung herstellen und aufrechterhalten können,
- Einrichtungen (19), die die Reinigung der Fördereinrichtung (15) ermöglichen, wobei Teilchen des Produkts noch in der Fördereinrichtung vorhanden sein können, wenn die Förderung einmal beendet ist, und
- Einrichtungen zum automatischen Steuern des Verfahrens.

5. Vorrichtung nach Anspruch 4 und zur Durchführung des Verfahrens nach Anspruch 3, dadurch gekennzeichnet, dass die Vorrichtung ausserdem enthält:

- eine Einrichtung (3), die das Entleeren des das Produkt einschliessenden Behälters (1) gewährleistet, und
- eine Vorspeicheranordnung (8), die gleichzeitig die Homogenisierung, falls erforderlich, und den Transport des Produkts zur Wiegeanordnung (11) gewährleistet.

6. Vorrichtung nach Anspruch 5, dadurch gekennzeichnet,

- dass die das Entleeren des Behälters (1) gewährleistende Einrichtung (3) aufweist:

a) einen Vibrator oder ein pneumatisches Gerät (3'), das einen Druck ausüben kann und mit der eventuell verformbaren Wand des Behälters (1) zusammenarbeitet,
b) eine Entleerungsleitung (4), die dicht und gleichzeitig verbunden ist einerseits mit der Öffnung des Behälters (1) und andererseits mit dem Eintritt eines Vorspeicher-Puffertrichters (8'), wobei der Pufferspeicher Teil der Vorspeicheranordnung ist, wobei diese Entleerungsleitung (4) ausserdem mit einem Absperrschieber (5) versehen ist.

7. Vorrichtung nach Anspruch 4, dadurch gekennzeichnet, dass die Vorrichtung ausserdem eine Entleerungsleitung (4) aufweist, die versehen ist:
mit einer Einrichtung (6), die einen Unterdruck und somit in der Leitung (4) eine Ansaugwirkung erzeugen kann, und mit einer Blaseinrichtung (7) zum Reinigen der Leitung (4) von Teilchen des zu dosierenden Produkts, wobei die Blaseinrichtung (7) wirksam ist, wenn die Entleerung beendet ist.

8. Vorrichtung nach Anspruch 5, dadurch gekennzeichnet, dass der Puffertrichter (8') mit einer Einrichtung (9) versehen ist, zum Homogenisieren des Produkts, zu dessen Entnahme und zum Beseitigen der Gefahr des Haftens des Produkts an der Wand des Puffertrichters (8'), etwa mit einem Extraktor in Form einer Schnecke, wobei die Inbetriebsetzung dieser Einrichtung zur Entnahme des Produkts und deren Stillsetzung automatisch durch die Wiegeeinrichtung (14) gesteuert werden, wenn die Wiegeanordnung (11) die gewünschte Last des zu dosierenden Produkts aufgenommen hat.

9. Vorrichtung nach Anspruch 4, dadurch gekennzeichnet, dass die Fördereinrichtung (15) mit zwei Drehschiebern (17) und (17') versehen ist.

10. Vorrichtung nach Anspruch 4, dadurch gekennzeichnet, dass die Einrichtungen (20), die das Erzeugen und das Aufrechterhalten der Undurchlässigkeit der Wiegeanordnung ermöglichen, aus Anschlüssen, Leitungen, Dichtungen, Ventilen, Schiebern, Drosselklappen, Gurten, Drehschiebern und Deckeln bestehen.

11. Vorrichtung nach Anspruch 4, dadurch gekennzeichnet, dass die Einrichtungen zum automatischen Steuern des Verfahrens, die alle oder einen Teil der an der Vorrichtung ausgeführten Vorgänge gewährleisten, aus einem Rechner bestehen, der die Befehle nach einem vorgegebenen Programm ausführt.

12. Vorrichtung nach Anspruch 4, dadurch gekennzeichnet, dass die Einrichtung (13), die das zu dosierende Produkt zum beweglichen Aufnehmer (16) liefern soll, in Form einer Schnecke vorliegt, die am Unterteil des Dosiertrichters (12) angeordnet ist, dessen Inbetriebsetzung automatisch gesteuert wird und dessen Stillsetzung durch die Wiegeeinrichtung (14) gesteuert wird, wenn eine gewünschte Menge des Produkts den Dosiertrichter (12) verlassen hat.

13. Vorrichtung nach Anspruch 4, dadurch gekennzeichnet, dass die Wiegeeinrichtung (14) eine Gleichgewichtsvorrichtung ist, die gleichzeitig auf eine Lastverringerung und eine Lasterhöhung anspricht und ausserdem statische Wägungen durchführen kann.

## Claims

1. Process for the dosage of predetermined quantities of a product intended to be delivered to a mobile receiver (16), comprising the stages of introduction of the product into a weighing unit (11); weighing and checking of the quantities of the product in the weighing unit, extraction of the product from the weighing unit and conveying the product through a connection device (15) towards the mobile receiver, the said process being characterized in that:

a) the product coming from a pre-stocking unit (8) is introduced in to the weighing unit (11) until a first weighing, called dynamic (I), indicates that the desired quantity of the product has been introduced into the said weighing unit (11), which first weighing then controls the stopping of the introduction of the product;
b) a second weighing, called static (II), checks what effective quantity of the product is in the weighing unit (11);

c) the product is made to leave the weighing unit (11) after a first butterfly valve (17) is opened at the entry of the connection device (15) until a third weighing, called dynamic (III), indicates that the desired quantity has left the said weighing unit (11), which third weighing (III) then controls the stopping of the output of the product from the weighing unit (11);

d) a fourth weighing, called static (IV), is carried out, on the quantity of product still contained in the weighing unit (11) after the connection device (15) is cleaned and a second butterfly valve (17') at the output of the connection device (15) is closed;

e) a check is made that the required quantity of product has been extracted from the weighing unit (11) to be passed towards the mobile receiver (16), by comparison between the values of the two static weighings, that is to say the second weighing (II) and the fourth weighing (IV);

f) if necessary, the desired weight is completed by making the weighing unit (11) deliver, so that it arrives in the mobile receiver (16), the quantity of product necessary to equal the dose of the product desired at the start;

the said process being carried out under conditions which ensure the impermeability of the weighing unit both as regards the product and the elements of the environment.

2. Process following claim 1, characterized in that:

– it ensures the exactness of the dosage with the precision of ±2.5 per mil of the weights weighed.

3. Process for the dosage following claim 1, characterized in that, at the start of the process, the further following stages are carried out:

– the product to be dosed is emptied in to the pre-stocking unit (8), in particular under suction, by exercising a pressure on the deformable wall of a container (1), in which the product is contained, by means of a pneumatic device, or by submitting the container (1) to vibrations or shocks, and

– the product is homogenized, if necessary, in the pre-stocking unit (8).

4. Device for the dosage of predetermined quantities of a product intended to be delivered to a mobile receiver (16) for carrying out the process according to claim 1, comprising a weighing unit (11) constituted by:

a) a dosing hopper (12) provided with a means (13) intended to deliver the product to be dosed to a mobile receiver, such as a dose extractor,

b) a means for weighing (14), and

c) a means (15) for conveying to ensure the conveying of the product to the mobile receiver (16) and to close the outlet of the weighing unit (11), this means being constituted by a connection device (15) placed between the weighing means (14) and the mobile receiver,

the said device being characterized in that:

– the weighing means (14) is able to carry out static and dynamic weighings; and in that

the weighing unit (11) comprises also

– means (20) enabling impermeability of the weighing unit to be created and maintained as regards both the product and the elements of the environment;

– means (18) able to produce the depression in the means (20) enabling impermeability of the weighing unit to be created and maintained;

– means (19) to enable the conveyance means (15) to be cleaned of particles of the product still remaining in the conveyance means, once the conveyance is finished, and

– means for conducting the said process automatically.

5. Device according to claim 4 and for carrying out the process according to claim 3, characterized in that the said device also includes:

– a means (3) ensuring the emptying of the container (1) containing the product, and

– a pre-stocking unit (8) simultaneously ensuring homogenization, if necessary, and the transfer of the product to the weighing unit (11).

6. Device according to claim 5, characterized in that:

– the means (3) ensuring the emptying of the container (1) comprises:

a) a vibrator or a pneumatic apparatus (3') able to exercise a pressure and cooperating with the possibly deformable wall of the container (1);

b) an emptying duct (4) connected in a sealed manner simultaneously on the one hand with the opening of the said container (1) and on the other hand with the entrance to a buffer pre-stocking hopper (8'), the said buffer hopper being part of the pre-stocking unit, this emptying duct (4) being provided in addition with an isolating gate (5).

7. Device according to claim 4, characterized in that the said device comprises in addition an emptying duct (4) which is provided with a means (6) able to create a depression and thus to cause an aspiration effect in the said duct (4) and a blowing means (7) intended to clean the said duct (4) of the particles of the product to be dosed, this blowing means (7) acting once the emptying is completed.

8. Device according to claim 5, characterized in that

– the buffer hopper (8') is provided with a means (9) to homogenize the product, to extract it and to eliminate the risk of adherence of the product to the wall of the said buffer hopper (8'), such as an extractor in the form of an endless screw, the starting up of the said means to extract the product and its stopping being automatically controlled by the weighing means (14), when the weighing unit (11) has received the desired charge of the product to be dosed.

9. Device according to claim 4, characterized in that the conveyance means (15) is provided with two butterfly valves (17) and (17').

10. Device according to claim 4, characterized in that the means (20) enabling the impermeability of the weighing unit to be created and maintained, are constituted by connection pieces, ducts, joints, valves, gates, butterfly valves, bands, check valves or covers.

11. Device according to claim 4, characterized in that the means for conducting the said process automatically ensuring the whole or a part of the operations carried out on the said device are constituted by a computer carrying out the orders according to a pre-established programme.

12. Device according to claim 4, characterized in that the means (13) intended to deliver the product to be dosed to the mobile receiver (16) is in the form of an endless screw at the lower part of the dosing hopper (12), of which the starting up is controlled automatically and of which the stopping is controlled by the weighing means (14) when a desired quantity of the product has left the dosing hopper (12).

13. Device according to claim 4, characterized in that the weighing means (14) is a balance device functioning both for a decreasing rate and an increasing rate of load, and in addition being able to carry out static weighings.